(19)

Europäisches Patentamt

European Patent Office

Office européen des brevets

(11) **EP 4 311 645 A1**

(12) **EUROPEAN PATENT APPLICATION**

(43) Date of publication:
**31.01.2024  Bulletin 2024/05**

(21) Application number: **22186970.4**

(22) Date of filing: **26.07.2022**

(51) International Patent Classification (IPC):
**B29B 17/02** *(2006.01)*      **C08J 11/06** *(2006.01)*
**C08J 11/08** *(2006.01)*

(52) Cooperative Patent Classification (CPC):
**C08J 11/06; B29B 17/02; B32B 43/006;**
B29B 2017/0289; B29K 2023/00; B29L 2009/003;
C08J 2323/04; C08J 2323/10

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Borealis AG
1020 Vienna (AT)**

(72) Inventors:
• **DENIFL, Peter
4021 Linz (AT)**
• **PIETTRE, Kilian
4021 Linz (AT)**

(74) Representative: **Maiwald GmbH
Elisenhof
Elisenstraße 3
80335 München (DE)**

(54) **DELAMINATION OF MULTILAYER FILMS USING AN AQUEOUS/ORGANIC EMULSION**

(57)    A process for delaminating multilayer films having a polyolefin:metal:polyolefin substructure by treating said multilayer films with an aqueous/organic emulsion.

**EP 4 311 645 A1**

**Description**

**Field of the Invention**

The present invention relates to a delamination process for processing multilayer film containing polyolefin recycling streams, making use of an emulsion delaminant system, as well as the use of such systems to achieve either simply delamination or combined delamination/demetallization, depending on the identity of the aqueous phase of the emulsion.

**Background to the Invention**

During the last decade, concern about plastics and the environmental sustainability of their use in current quantities has grown. This has led to new legislation on disposal, collection and recycling of polyolefins. There have additionally been efforts in a number of countries to increase the percentage of plastic materials being recycled instead of being sent to landfill.

In Europe, plastic waste accounts for approximately 27 million tons of waste a year; of this amount in 2016, 7.4 million tons were disposed of in landfill, 11.27 million tons were burnt (in order to produce energy) and around 8.5 million tons were recycled. Polypropylene based materials are a particular problem as these materials are extensively used in packaging. Taking into account the huge amount of waste collected compared to the amount of waste recycled back into the stream (amounting to only about 30 %), there is still a great potential for intelligent reuse of plastic waste streams and for mechanical recycling of plastic wastes.

Taking the automobile industry as an example: in Europe the end of life (ELV) directive from the EU states, that 85%/95% of materials from vehicles should be recyclable or recoverable. The present rate of recycling of automobile components is significantly below this target. On average vehicles consist of 9 wt.-% plastics, out of this 9 wt.-% only 3 wt.-% is currently recycled. Therefore, there is still a need to be met if targets for recycling plastics in the automobile industry are to be achieved However, due to cost reasons, poor mechanical properties and inferior processing properties waste streams containing cross-linked polyolefins are often used for energy recovery (e.g. incineration in a district heating plant or for heat generation in the cement industry) and are less often recycled into new products.

One major trend in the field of polyolefins is the use of recycled materials that are derived from a wide variety of sources. Durable goods streams such as those derived from waste electrical equipment (WEE) or end-of-life vehicles (ELV) contain a wide variety of plastics. These materials can be processed to recover acrylonitrile-butadiene-styrene (ABS), high impact polystyrene (HIPS), polypropylene (PP) and polyethylene (PE) plastics. Separation can be carried out using density separation in water and then further separation based on fluorescence, near infrared absorption or raman fluorescence.

The better the quality, i.e. the higher the purity, of the recycled polyolefin the more expensive the material is. Moreover, recycled polyolefin materials are often cross-contaminated with non-polyolefin materials, such as polyethylene terephthalate, polyamide, polystyrene or non-polymeric substances like wood, paper, glass or aluminium. Furthermore, polyolefin films are often multilayer structures, which combine the barrier properties and the sealing properties of the layers. These multilayer structures can, in addition to the predominant polyolefin, contain other polyolefins and even nonpolyolefinic materials.

In addition, recycled polyolefin rich materials often have properties much worse than those of the virgin materials, unless the amount of recycled polyolefin added to the final compound is extremely low.

Packaging materials are often formed from multilayer laminates. Such laminates are difficult to recycle, since they often contain multiple polymer layers and/or other non-polymeric materials that would contaminate the polymeric output of the recycling process, which is preferably a single polyolefin (e.g. polypropylene or polyethylene).

The removal of such films from polyolefin mixed recycling streams is the simplest way to remove these sources of contamination; however, this option is wasteful, with potentially useful polyolefin not being recovered.

Many delamination procedures are known in the art, often employing highly engineered delaminant solutions. Whilst these procedures can help to recover more of the desired polyolefin from a particular polyolefin recycling process, incorporation of extra steps into the process is undesirable from the standpoint of process economy.

As such, a method wherein a delamination step can be combined with existing steps, such as washing or deodorising, using cheap, readily available delaminants would be incredibly useful for minimising waste in recycling processes in an economical manner.

**Summary of the Invention**

The present invention is based on the finding that a simple washing/delamination step involving organic/aqueous emulsions can address these goals

In a first aspect, the present invention is directed to a process for treating a polyolefin recycling stream (A), comprising, in the given order, the steps of:

i) providing a polyolefin recycling stream (A), comprising at least 50 wt.-%, relative to the total weight of the polyolefin recycling stream (A), of multilayer films (F) comprising the following layers:

(a) an outer layer consisting of a composition comprising at least 90 wt.-% of one or more polyolefins (PO);
(b) a metal layer in contact with the outer layer (a); and
(c) one or more further layers wherein at least one of the one or more further layers is in contact with the metal layer (b), wherein the one or more further layers may contain non-polyolefin material or one or more polyolefins that may be the same as or different to the one or more polyolefins (PO) of the outer layer (a), with the proviso that the further layer that is in contact with the metal layer (b) contains one or more polyolefins that may be the same as or different to the one or more polyolefins (PO) of the outer layer (a),

ii) contacting the polyolefin recycling stream (A) with an emulsion (E) comprising:

(a) an aqueous phase; and
(b) an organic phase,

thereby obtaining a suspended polyolefin recycling stream (B),
iii) subjecting the suspended polyolefin recycling stream (B) to agitation through ultrasonic treatment, thereby obtaining a treated recycling stream (C) dispersed in the emulsion (E),
iv) removing the emulsion (E) from the treated recycling stream (C), and
v) optionally recycling one, or both, of the aqueous phase and the organic phase.

In a second aspect, the present invention is directed to a use of an emulsion (E1) comprising an organic phase and a substantially neutral aqueous phase having a pH in the range from 5.0 to 9.0, more preferably in the range from 6.0 to 8.0, most preferably in the range from 6.5 to 7.5, for effecting delamination of multilayer films (F) comprising the following layers:

(a) an outer layer consisting of a composition comprising at least 90 wt.-% of one or more polyolefins (PO);
(b) a metal layer in contact with the outer layer (a); and
(c) one or more further layers wherein at least one of the one or more further layers is in contact with the metal layer (b), wherein the one or more further layers may contain non-polyolefin material or one or more polyolefins that may be the same as or different to the one or more polyolefins (PO) of the outer layer (a), with the proviso that the further layer that is in contact with the metal layer (b) contains one or more polyolefins that may be the same as or different to the one or more polyolefins (PO) of the outer layer (a),

to afford a metallized film comprising layers (a) and (b) and a further film derived from layer (c), which may be a monolayer or multilayer film.
In a third aspect, the present invention is directed to a use of an emulsion (E2) comprising an organic phase and an acidic aqueous phase having a pH in the range from 0.0 to 5.0, more preferably in the range from 0.0 to 3.0, most preferably in the range from 0.0 to 1.0, for effecting delamination and demetallization of multilayer films (F) comprising the following layers:

(a) an outer layer consisting of a composition comprising at least 90 wt.-% of one or more polyolefins (PO);
(b) a metal layer in contact with the outer layer (a); and
(c) one or more further layers wherein at least one of the one or more further layers is in contact with the metal layer (b), wherein the one or more further layers may contain non-polyolefin material or one or more polyolefins that may be the same as or different to the one or more polyolefins (PO) of the outer layer (a), with the proviso that the further layer that is in contact with the metal layer (b) contains one or more polyolefins that may be the same as or different to the one or more polyolefins (PO) of the outer layer (a),

to afford a monolayer film derived from layer (a) and a further film derived from layer (c), which may be a monolayer or multilayer film.
In a final aspect, the present invention is directed to a use of an emulsion (E3) comprising an organic phase and an alkaline aqueous phase having a pH in the range from 9.0 to 14.0, more preferably in the range from 11.0 to 14.0, most preferably in the range from 12.0 to 14.0, for effecting delamination and demetallization of multilayer films (F) comprising the following layers:

(a) an outer layer consisting of a composition comprising at least 90 wt.-% of one or more polyolefins (PO);
(b) a metal layer in contact with the outer layer (a); and
(c) one or more further layers wherein at least one of the one or more further layers is in contact with the metal layer (b), wherein the one or more further layers may contain non-polyolefin material or one or more polyolefins that may be the same as or different to the one or more polyolefins (PO) of the outer layer (a), with the proviso that the further layer that is in contact with the metal layer (b) contains one or more polyolefins that may be the same as or different to the one or more polyolefins (PO) of the outer layer (a),

to afford a monolayer film derived from layer (a) and a further film derived from layer (c), which may be a monolayer or multilayer film.

**Definitions**

The person skilled in the art would be aware that pH values of greater than 14.0 and lower than 0.0 are theoretically possible; however, they would also be aware that the determination of such pH values is incredibly difficult using conventional pH probes. As such, in the context of this invention, aqueous solutions having an effective pH of greater than 14.0 are considered to have a pH of 14.0 and aqueous solutions having an effective pH of lower than 0.0 are considered to have a pH of 0.0.

The term logP refers to the partition function between two solvents, which, unless specified otherwise, are taken to be octanol and water. The logP of a given compound is calculated according to the following formula:

$$logP_{(octanol/water)} = log\left(\frac{[compound]^{octanol}}{[compound]^{water}}\right)$$

wherein the values [compound]$^{octanol}$ and [compound]$^{water}$ denote the concentration of the given compound in the octanol or water phase, respectively, of a biphasic octanol/water system. Whilst the person skilled in the art would know how to measure this property according to well-known methods, the values of many compounds have been tabulated, and can be found i.a. in "James Sangster, Octanol-Water Partition Coefficients of simple organic compounds. J. Phys. Chem. Ref. Data, 1989, Vol. 18, No 3, 1111-1226", meaning that the person skilled in the art would often not have to determine the logP experimentally.

The term "fully saturated" means that the compound (typically organic compound) does not have any double or triple bonds, i.e. all bonds present in the molecule are single (sigma) bonds. Fully saturated compounds may be linear, branched or cyclic. Fully saturated compounds are typically less reactive than unsaturated compounds, due to the presence of fewer reactive functional groups in the compound.

"Inorganic oxoacids" are any compounds wherein an acidic hydrogen is bound to an oxygen atom, wherein the acid does not contain a hydrocarbon chain or ring structure (i.e. organic moiety). These inorganic oxoacids typically, though not strictly always, have a formula of type $H_mXO_n$, where X is an atom functioning as a *central atom*, whereas parameters *m* and *n* depend on the oxidation state of the element X. In most cases, the element X is a nonmetal, but some metals, for example chromium and manganese, can form oxoacids when occurring at their highest oxidation states. Due to the generally high oxidation state of the central atom X, the conjugate base of such oxoacids may act as an oxidant.

In the context of the present invention, the term "rinse" is used to indicate the addition of a solvent, typically water, which is used to remove foreign material or remaining liquid from the surface of the polyolefin. This can be achieved in very short times, i.e. less than 5 minutes, often less than 1 minute, in contrast to "washing" steps that typically require a longer time, and agitation, to remove adherent foreign material from the surface of the polyolefin and potentially extract volatile organic compounds from the polyolefin.

Post-consumer waste refers to objects having completed at least a first use cycle (or life cycle), i.e. having already served their first purpose; while post-industrial waste refers to manufacturing scrap, which does not normally reach a consumer.

Recycling streams may contain both articles for recycling and fragments of articles for recycling, for example flakes. In the context of the present invention, the content of the recycling streams will be referred to as pieces, irrespective of whether these pieces are whole articles, fragments thereof, or flakes thereof. In certain embodiments, the pieces may be flakes, whereas in other embodiments pieces may be larger objects that may be converted into flakes at a later stage.

Polyolefin films are typically made up of a thin layer or layers of polyolefin, meaning that one dimension of the films will be very small and the other two dimensions can be orders of magnitude greater. The same is true for flakes, which may be formed from films or from similarly thin shaped articles such as plastic bags. In the context of the present disclosure, the term "in flaked form", or "flakes" or "flaked" refers to the shape of the object, wherein, like films, one dimension of the flake is very small and the other two dimensions may be orders of magnitude greater. Any complicated articles with defined shapes, such as plastic bags, which have well defined outer and inner surfaces, would not be considered as either films or flakes in the context of the present invention, although these articles may be converted into flakes of any size by methods known to the person skilled in the art.

In the context of the present invention, the flake surface area is defined as the surface area of one of the faces of a flaked polyolefin. This surface area is approximately half of the total surface area of the flake, which has two such faces in addition to a very small amount of surface area coming from the edges of the flake. Flakes according to the present invention will typically have a flake surface area in the range from 50 to 2500 mm$^2$, more preferably in the range from 100 to 1600 mm$^2$, most preferably in the range from 150 to 900 mm$^2$.

The unit % v/v refers to the volume concentration of a particular solvent in a mixture, i.e. the volume of one component of the mixture divided by the volume of the entire mixture.

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of elements, this is also to be understood to disclose a group, which preferably consists only of these elements.

Where an indefinite or definite article is used when referring to a singular noun, e.g. "a", "an" or "the", this includes a plural of that noun unless something else is specifically stated.

### Detailed Description

Process

In a first aspect, the present invention is directed to a process for treating a polyolefin recycling stream

(A), comprising, in the given order, the steps of:

i) providing a polyolefin recycling stream (A), comprising at least 50 wt.-%, relative to the total weight of the polyolefin recycling stream (A), of multilayer films (F) comprising the following layers:

(a) an outer layer consisting of a composition comprising at least 90 wt.-% of one or more polyolefins (PO);
(b) a metal layer in contact with the outer layer (a); and
(c) one or more further layers wherein at least one of the one or more further layers is in contact with the metal layer (b), wherein the one or more further layers may contain non-polyolefin material or one or more polyolefins that may be the same as or different to the one or more polyolefins (PO) of the outer layer (a), with the proviso that the further layer that is in contact with the metal layer (b) contains one or more polyolefins that may be the same as or different to the one or more polyolefins (PO) of the outer layer (a),

ii) contacting the polyolefin recycling stream (A) with an emulsion (E) comprising:

(a) an aqueous phase; and
(b) an organic phase,

thereby obtaining a suspended polyolefin recycling stream (B),
iii) subjecting the suspended polyolefin recycling stream (B) to agitation through ultrasonic treatment, thereby obtaining a treated recycling stream (C) dispersed in the emulsion (E),
iv) removing the emulsion (E) from the treated recycling stream (C), and
v) optionally recycling one, or both, of the aqueous phase and the organic phase.

Step v) is an optional step, meaning that the process according to the present invention may comprise, in the given order, the steps of:

i) providing a polyolefin recycling stream (A), comprising at least 50 wt.-%, relative to the total weight of the polyolefin recycling stream (A), of multilayer films (F) comprising the following layers:

(a) an outer layer consisting of a composition comprising at least 90 wt.-% of one or more polyolefins (PO);

(b) a metal layer in contact with the outer layer (a); and
(c) one or more further layers wherein at least one of the one or more further layers is in contact with the metal layer (b), wherein the one or more further layers may contain non-polyolefin material or one or more polyolefins that may be the same as or different to the one or more polyolefins (PO) of the outer layer (a), with the proviso that the further layer that is in contact with the metal layer (b) contains one or more polyolefins that may be the same as or different to the one or more polyolefins (PO) of the outer layer (a),

ii) contacting the polyolefin recycling stream (A) with an emulsion (E) comprising:

(a) an aqueous phase; and
(b) an organic phase,

thereby obtaining a suspended polyolefin recycling stream (B),
iii) subjecting the suspended polyolefin recycling stream (B) to agitation through ultrasonic treatment, thereby obtaining a treated recycling stream (C) dispersed in the emulsion (E), and
iv) removing the emulsion (E) from the treated recycling stream (C).

Alternatively, the process according to the present invention may comprise, in the given order, the steps of:

i) providing a polyolefin recycling stream (A), comprising at least 50 wt.-%, relative to the total weight of the polyolefin recycling stream (A), of multilayer films (F) comprising the following layers:

(a) an outer layer consisting of a composition comprising at least 90 wt.-% of one or more polyolefins (PO);
(b) a metal layer in contact with the outer layer (a); and
(c) one or more further layers wherein at least one of the one or more further layers is in contact with the metal layer (b), wherein the one or more further layers may contain non-polyolefin material or one or more polyolefins that may be the same as or different to the one or more polyolefins (PO) of the outer layer (a), with the proviso that the further layer that is in contact with the metal layer (b) contains one or more polyolefins that may be the same as or different to the one or more polyolefins (PO) of the outer layer (a),

ii) contacting the polyolefin recycling stream (A) with an emulsion (E) comprising:

(a) an aqueous phase; and
(b) an organic phase,

thereby obtaining a suspended polyolefin recycling stream (B),
iii) subjecting the suspended polyolefin recycling stream (B) to agitation through ultrasonic treatment, thereby obtaining a treated recycling stream (C) dispersed in the emulsion (E),
iv) removing the emulsion (E) from the treated recycling stream (C), and
v) recycling one, or both, of the aqueous phase and the organic phase.

Step i) involves providing a polyolefin recycling stream (A).
The polyolefin recycling stream (A) comprises at least 50 wt.-%, more preferably at least 60 wt.-%, yet more preferably at least 70 wt.-%, still more preferably at least 80 wt.-%, still yet more preferably at least 90 wt.-%, relative to the total weight of the polyolefin recycling stream (A), of multilayer films (F) comprising the following layers:

(a) an outer layer consisting of a composition comprising at least 90 wt.-% of one or more polyolefins (PO);
(b) a metal layer in contact with the outer layer (a); and
(c) one or more further layers wherein at least one of the one or more further layers is in contact with the metal layer (b), wherein the one or more further layers may contain non-polyolefin material or one or more polyolefins that may be the same as or different to the one or more polyolefins (PO) of the outer layer (a), with the proviso that the further layer that is in contact with the metal layer (b) contains one or more polyolefins that may be the same as or different to the one or more polyolefins (PO) of the outer layer (a).

In one particular embodiment, the polyolefin recycling stream (A) consists of multilayer films (F) as defined above.
It is particularly preferred that the metal layer (b) is a vapour-deposited metal layer, wherein said metal layer has been vapour-deposited on the outer layer (a).
The one or more further layers (c) may comprise any material, either polyolefin or non-polyolefin, with the proviso that the layer in contact with the metal layer (b) contains one or more polyolefins.

The polyolefin recycling stream (A) preferably originates from post-consumer waste, post-industrial waste or a combination thereof, most preferably from post-consumer waste.

The polyolefin recycling stream (A) is usually obtained by sorting a mixed polyolefin recycling stream using known sorting techniques. Suitable methods include near-IR spectroscopic analysis, mid-IR spectroscopic analysis, high-speed laser spectroscopic analysis, Raman spectroscopic analysis, Fourier-transform infrared (FT-IR) spectroscopic analysis, and sorting by colour. Particularly preferred is near-IR spectroscopic analysis.

The precise form of the pieces of multilayer film (F) is not critical; however, it is preferred that the multilayer film (F) is provided in flaked form.

Although provision in flaked form is not thought to be critical for achieving delamination using the emulsions of the present invention, provision in flaked form would be necessary for most conventional pre-sorting or post-sorting steps and furthermore makes the polyolefin recycling stream (A), the suspended recycling stream (B), and the treated recycling stream (C) easier to process.

Step ii) involves contacting the polyolefin recycling stream (A) with an emulsion (E) comprising:

(a) an aqueous phase; and
(b) an organic phase,

thereby obtaining a suspended polyolefin recycling stream (B).

The emulsion is defined in more detail later.

Step iii) involves subjecting the suspended polyolefin recycling stream (B) to agitation through ultrasonic treatment, thereby obtaining a treated recycling stream (C) dispersed in the emulsion (E).

As would be understood by the person skilled in the art, all polyolefins typically contain fractions that are soluble in organic solvents, with many polyolefins characterized by their hexane soluble content or xylene soluble content. Although a small amount of polyolefin dissolution may be tolerated, it is better not too dissolve too much of the recycled polyolefin. As such, the person skilled in the art would understand that they would need to avoid using excessive amounts of organic solvent in the emulsion (E). Minimizing the amount of organic solvent employed would also be advantageous from an economic perspective.

Preferably, the polyolefin recycling stream (A) and the emulsion (E) are present in step iii) in a weight ratio in the range from 5:95 to 67:33, most preferably in the range from 5:95 to 45:55.

It is preferred that step iii) is carried out for a period of time in the range from 1 minute to 4 hours, more preferably in the range from 5 minutes to 2 hours, most preferably in the range from 10 minutes to 1 hour.

It is also preferred that step iii) is carried out at a temperature in the range from 20 to 95 °C, more preferably in the range from 40 to 90 °C, most preferably in the range from 50 to 85 °C.

In addition to agitation through ultrasonic treatment, further methods of agitation, such as mechanical mixing, mechanical grinding or pump around loop may be used in combination with the ultrasonic treatment.

Step iv) involves the removal of emulsion (E) from the treated recycling stream (C). Whilst this process is relatively simple to achieve through decanting and/or filtering the mixture, traces of the emulsion (E) and/or either of the aqueous or organic phase can remain on the surface of the recycled polyolefin. These traces of emulsion (E) and/or either of the aqueous or organic phase may contain solubilized organic compounds, and it is therefore advantageous to remove all traces of the emulsion (E).

This may be achieved through the use of rinsing steps, whereby any foreign material and/or aqueous solutions are rinsed from the surface of the recycled polyolefin.

As such, it is preferred that the process comprises an additional step iv.i) of rinsing residue of the emulsion (E) and/or any other foreign material and/or degradation products thereof from the recycled polyolefin, which is carried out after step iv).

In addition to, or alternatively to, the rinsing step iv.i), it is preferred that the process comprises an additional step iv.ii) of drying the treated recycling stream, which is carried out after step iv) or, if step (iv.i) is present, after step (iv.i). This drying step removes any residual aqueous phase, organic phase, or rinsing solution that may be present on the surface of the recycled polyolefin.

The product of the process will either comprise a mixture of metallized films comprising layers (a) and (b) and further films derived from layer (c), which may be a monolayer or multilayer film or comprise a mixture of monolayer films derived from layer (a) and further films derived from layer (c), which may be a monolayer or multilayer film, depending on the nature of the emulsion introduced in step ii).

Said product mixture may be sorted in order to create sorted streams of metallized films comprising layers (a) and (b) and/or monolayer films derived from layer (a) as well as further films derived from layer (c).

This sorting can be carried out by any method known to the person skilled in the art. Suitable methods include near-IR spectroscopic analysis, mid-IR spectroscopic analysis, high-speed laser spectroscopic analysis, Raman spectroscopic analysis, Fourier-transform infrared (FT-IR) spectroscopic analysis, and sorting by colour. Particularly preferred is near-IR spectroscopic analysis.

**Emulsion (E)**

The emulsion (E) of the present invention comprises:

    i) an aqueous phase; and
    ii) an organic phase.

The skilled person would be aware that emulsions may comprise further phases, being immiscible with the aqueous and organic phases as described above, and indeed such complex emulsions are not excluded from the present invention. These complex emulsions may have advantages in the removal of particularly specialised volatile organic compounds; however, in the context of the present invention, it is preferred that the emulsion (E) consists of the aqueous phase and organic phase as described above, since this results in an operationally simple process.

The emulsion (E) of the present invention may be preformed before contact with the polyolefin recycling stream (A) in step ii) or alternatively the aqueous phase and the organic phase may be added separately to the polyolefin recycling stream (A) and the emulsion (E) generated during step ii).

Dual phase emulsions comprising an aqueous and organic phase are classified as either oil-in-water or water-in-oil emulsions, depending on which component forms the dispersed phase and which forms the continuous phase, which can usually be predicted from the relative amounts (i.e. ratio) of the phases.

In the following discussion, the terms "oil" and "water" are equivalent to "organic phase" and "aqueous phase" respectively.

The relative content of the organic and aqueous phases are not particularly limited in the present invention. It is preferred that the ratio of water to oil is in the range from 1:99 to 99:1, more preferably in the range from 5:95 to 99:5.

In one embodiment, the emulsion (E) of the present invention is an oil-in-water emulsion, wherein the ratio of water to oil is in the range from 50:50 to 99:1, more preferably in the range from 75:25 to 95:5.

In an alternative embodiment, the emulsion (E) of the present invention is a water-in-oil emulsion, wherein the ratio of oil to water is in the range from 50:50 to 99:1, more preferably in the range from 75:25 to 95:5.

Whilst the precise ratio between the water and the oil in the emulsion (E) is not critical for achieving effective removal of volatile organic compounds, there are other advantages to certain ratios. In particular, ratios of between 75:25 and 95:5 are useful if the recycling of the major component is to be achieved. Furthermore, the organic phase, whilst relatively inexpensive, is more costly to employ than water, due to waste flow management considerations. Consequently, the embodiment wherein the ratio of water to oil is in the range from 75:25 to 95:5 is particularly preferred from an economic perspective, especially if recycling of the aqueous phase is desired. This embodiment is furthermore advantageous for avoiding excessive polyolefin dissolution in the organic phase.

The organic phase of the emulsion (E) is beneficially unreactive towards both the aqueous phase and the polyolefin recycling stream (A), in addition to being highly stable. Furthermore, the polarity is beneficially such that an emulsion is formed with the aqueous phase.

It is preferred that the organic phase comprises at least 90% v/v of one or more fully saturated organic solvents having logP values in the range from 1.0 to 10.0, more preferably in the range from 2.0 to 8.0, most preferably in the range from 3.0 to 6.0.

It is preferred that the organic phase comprises at least 95% v/v of one or more fully saturated organic solvents having logP values in the range from 1.0 to 10.0, more preferably at least 98% v/v, most preferably the organic phase consists of one or more fully saturated organic solvents having logP values in the range from 1.0 to 10.0.

In a particularly preferred embodiment, the organic phase comprises at least 90% v/v of, more preferably 95% v/v of, yet more preferably at least 98% v/v of, most preferably consists of a single fully saturated organic solvent having a logP value in the range from 1.0 to 10.0.

It is particularly preferred that the one or more fully saturated organic solvents are selected from the group of linear and branched alkanes and ethers (i.e. containing only carbon, hydrogen and optionally oxygen), most preferably the group of linear and branched alkanes (i.e. containing only carbon and hydrogen).

In the broadest sense, the aqueous phase may be any aqueous solution or simply pure water.

In all embodiments, the aqueous phase may comprise a detergent in an amount in the range from 0.1 wt.-% to 1.0 wt.-%, relative to the total weight of the aqueous phase.

The detergent(s) may be commercially available detergent mixtures or may be composed in any way known to the person skilled in the art. Suitable detergents include TUBIWASH SKP, TUBIWASH GFN, TUBIWASH EYE and TUBIWASH TOP, commercially available from CHT, KRONES colclean AD 1004, KRONES colclean AD 1002 and KRONES colclean AD 1008 from KIC KRONES, and P3-stabilon WT, P3 stabilon AL from ECOLAB Ltd.

Substantially neutral emulsion **(E1)**

In one embodiment of the emulsion (E1), the aqueous phase is a substantially neutral aqueous phase, having a pH in the range from 5.0 to 9.0, more preferably in the range from 6.0 to 8.0, most preferably in the range from 6.5 to 7.5.

Acidic emulsion (E2)

In an alternative embodiment of the emulsion (E2), the aqueous phase is an acidic aqueous phase, having a pH in the range from 0.0 to 5.0, more preferably in the range from 0.0 to 3.0, most preferably in the range from 0.0 to 1.0.

It is particularly preferred that the acidic aqueous phase is an inorganic oxoacid solution.

It is preferred that the inorganic oxoacid is selected from the group consisting of disulphuric acid, sulphuric acid, phosphoric acid, nitric acid, perchloric acid, and mixtures thereof.

In a particularly preferred embodiment, the inorganic oxoacid is sulphuric acid.

It is preferred that the pKa of the inorganic oxoacid is in the range from -5.0 to 5.0, preferably in the range from -5.0 to 0.0.

It is additionally preferred that the amount of the inorganic oxoacid in aqueous solution A is in the range of 40 to 100 wt.-% (corresponding for sulphuric acid to a molarity of 5.3 to 18.65 M), more preferably in the range from 70 to 98 wt.-% (corresponds to 11.5 M to 18.4 M, most preferably from 94 to 98 wt.-% (corresponds to 17.8 M to 18.4 M).

The acidic aqueous phase may comprise more than one inorganic oxoacid. The above-mentioned concentration and pKa values refer to each individual acid.

It is particularly preferred that aqueous solution A is an aqueous solution of sulphuric acid at a concentration in the range from 94 to 98 wt.-%.

Alkaline emulsion (E3)

In a further alternative embodiment of the emulsion (E3), the aqueous phase is an alkaline aqueous phase, having a pH in the range from 9.0 to 14.0, more preferably in the range from 11.0 to 14.0, most preferably in the range from 12.0 to 14.0.

It is preferred that the alkaline aqueous phase comprises a base in an amount in the range from 0.05 to 10 wt.-%, more preferably in the range from 0.10 to 7 wt.-%, most preferably in the range from 0.50 to 5 wt.-%, relative to the total weight of the alkaline aqueous solution.

The choice of base is not crucial, however it is preferred that the alkaline aqueous phase is an aqueous solution of a base selected from the group consisting of calcium hydroxide, potassium hydroxide, magnesium hydroxide, lithium hydroxide, sodium bicarbonate, sodium hydroxide and mixtures thereof.

It is particularly preferred that the base is sodium hydroxide.

Use

In a second aspect, the present invention is directed to a use of an emulsion (E1) comprising an organic phase and a substantially neutral aqueous phase having a pH in the range from 5.0 to 9.0, more preferably in the range from 6.0 to 8.0, most preferably in the range from 6.5 to 7.5, for effecting delamination of multilayer films (F) comprising the following layers:

   (a) an outer layer consisting of a composition comprising at least 90 wt.-% of one or more polyolefins (PO);
   (b) a metal layer in contact with the outer layer (a); and
   (c) one or more further layers wherein at least one of the one or more further layers is in contact with the metal layer (b), wherein the one or more further layers may contain non-polyolefin material or one or more polyolefins that may be the same as or different to the one or more polyolefins (PO) of the outer layer (a), with the proviso that the further layer that is in contact with the metal layer (b) contains one or more polyolefins that may be the same as or different to the one or more polyolefins (PO) of the outer layer (a),

to afford a metallized film comprising layers (a) and (b) and a further film derived from layer (c), which may be a monolayer or multilayer film.

In this particular use, the choice of a substantially neutral aqueous phase has the result that layer (b) will be delaminated from layer (c), affording a metallized film comprising layers (a) and (b) and a further film derived from layer (c), which may be a monolayer or multilayer film. Demetallization of the metallized film comprising layers (a) and (b) is avoided, which may enable a more efficient separation of the generated films, before demetallization is achieved in a subsequent step.

In a third aspect, the present invention is directed to a use of an emulsion (E2) comprising an organic phase and an acidic aqueous phase having a pH in the range from 0.0 to 5.0, more preferably in the range from 0.0 to 3.0, most preferably in the range from 0.0 to 1.0, for effecting delamination and demetallization of multilayer films (F) comprising the following layers:

(a) an outer layer consisting of a composition comprising at least 90 wt.-% of one or more polyolefins (PO);
(b) a metal layer in contact with the outer layer (a); and
(c) one or more further layers wherein at least one of the one or more further layers is in contact with the metal layer (b), wherein the one or more further layers may contain non-polyolefin material or one or more polyolefins that may be the same as or different to the one or more polyolefins (PO) of the outer layer (a), with the proviso that the further layer that is in contact with the metal layer (b) contains one or more polyolefins that may be the same as or different to the one or more polyolefins (PO) of the outer layer (a),

to afford a monolayer film derived from layer (a) and a further film derived from layer (c), which may be a monolayer or multilayer film.

In a final aspect, the present invention is directed to a use of an emulsion (E3) comprising an organic phase and an alkaline aqueous phase having a pH in the range from 9.0 to 14.0, more preferably in the range from 11.0 to 14.0, most preferably in the range from 12.0 to 14.0, for effecting delamination and demetallization of multilayer films (F) comprising the following layers:

(a) an outer layer consisting of a composition comprising at least 90 wt.-% of one or more polyolefins (PO);
(b) a metal layer in contact with the outer layer (a); and
(c) one or more further layers wherein at least one of the one or more further layers is in contact with the metal layer (b), wherein the one or more further layers may contain non-polyolefin material or one or more polyolefins that may be the same as or different to the one or more polyolefins (PO) of the outer layer (a), with the proviso that the further layer that is in contact with the metal layer (b) contains one or more polyolefins that may be the same as or different to the one or more polyolefins (PO) of the outer layer (a),

to afford a monolayer film derived from layer (a) and a further film derived from layer (c), which may be a monolayer or multilayer film.

In the third and final aspects, the emulsions used are capable of affecting both delamination and demetallization, avoiding the need for a separate demetallization step.

All fallback positions and preferable embodiments provided in the process and emulsion sections above are applicable mutatis mutandis to the uses of the second, third and final aspects.

## EXAMPLES

In the following experiments, a number of different washing systems were used to treat exemplary post-industrial waste films (PIW) and post-consumer waste films (PCW). The washing systems used were as follows:

Neutral emulsion:     an emulsion formed of water and heptane
Alkaline emulsion:     an emulsion formed of 1.8 wt.-% NaOH aqueous solution and heptane
Acidic emulsion:     an emulsion formed of concentrated sulphuric acid (i.e. 96 wt.-%) and heptane
Water wash:     only water was used
Heptane wash:     only heptane was used
Alkaline wash:     only a 3.0 wt.-% NaOH aqueous solution was used

Each of the emulsions was formed from 80% v/v aqueous phase and 20% v/v organic phase (i.e. heptane).

The post-industrial waste films (PIW) have the following layers:

(a) 50 $\mu$m polypropylene layer,
(b) 0.03 $\mu$m aluminium layer;
(c) a 25 $\mu$m multilayer film, comprising three layers, having the following compositions:

(c1) 5 $\mu$m polypropylene tie layer comprising an oxygen-containing compound
(c2) 15 $\mu$m polypropylene layer
(c3) 5 $\mu$m polypropylene tie layer comprising an oxygen-containing compound

wherein the aluminium layer (b) was formed via vapor deposition onto the polypropylene layer (a) and the order of the layers is (a):(b):(c1):(c2):(c3).

The post-consumer waste films (PCW) have the same structure as the post-industrial waste films (PIW), with the exception that the final layer (c3) has a layer of ink on the outer surface (i.e. the surface that faces away from layer (c2).

The results of the delamination experiments are given in Table 1. Experiments were carried out both at room temperature (RT) and at 80 °C, whilst the PIW or PCW to emulsion (E) weight ratio is 30:70.

Whether or not separation (i.e. delamination) between layers (b) and (c) is noted, as is whether demetallization has occurred, providing a demetallized film consisting of layer (a). For the PCW samples, it is further noted whether the ink was removed from layer (c) or not.

Table 1 Results of delamination experiments

| Solution | Sample | T (°C) | Separation | Demetallization | Deinking | Time for complete delamination and/or demetallization (min) |
|---|---|---|---|---|---|---|
| Water wash | PIW | RT | N | N | - | No separation |
| Water wash | PCW | RT | N | N | N | No separation |
| Water wash | PIW | 80 | N | N | - | No separation |
| Water wash | PCW | 80 | N | N | N | No separation |
| Alkaline wash | PIW | 80 | Y | Y | - | 120 (no ultrasound) |
| Alkaline wash | PIW | 80 | Y | Y | - | 50 |
| Heptane wash | PIW | RT | N | N | - | No separation |
| Heptane wash | PCW | RT | N | N | N | No separation |
| Heptane wash | PIW | 80 | N | N | - | No separation |
| Heptane wash | PCW | 80 | N | N | N | No separation |
| Neutral emulsion | PIW | RT | Y | N | - | 10 |
| Neutral emulsion | PCW | RT | Y | N | N | 10 |
| Neutral emulsion | PIW | 80 | Y | N | - | 10 |
| Neutral emulsion | PCW | 80 | Y | N | N | 10 |
| Alkaline emulsion | PIW | RT | Y | Y | - | 10-15 |
| Alkaline emulsion | PCW | RT | Y | Y | Y | 10-15 |
| Alkaline emulsion | PIW | 80 | Y | Y | - | 10-15 |

(continued)

| Solution | Sample | T (°C) | Separation | Demetallization | Deinking | Time for complete delamination and/or demetallization (min) |
|---|---|---|---|---|---|---|
| Alkaline emulsion | PCW | 80 | Y | Partially | Y | 10-15 |
| Acidic emulsion | PIW | RT | Y | Y | - | 10-15 |
| Acidic emulsion | PCW | RT | Y | Y | Y | 10-15 |

As can be seen from Table 1, all three emulsions employed were successful at achieving delamination, both at room temperature and at 80 °C.

On the other hand, the water wash and the heptane wash were ineffective at achieving delamination or demetallization, both at room temperature and at 80 °C. The alkaline wash was able to achieve a combined demetallization-delamination, although only after very long reaction times. It is believed that the mechanism by which the alkaline wash achieves delamination is via a demetallization that slowly works its way from the edges of the flake to the centre.

The neutral emulsion affects a delamination without an accompanying demetallization, thus the mechanism of the delamination must be different. The alkaline and acidic emulsions are believed to achieve the delamination/demetallization via an initial delamination (as for the neutral emulsion), exposing the metal layer to the alkaline/acidic emulsions, which are then able to affect a much more rapid demetallization than is possible using the alkaline wash alone, once the surface of the metal layer is exposed to the emulsion. Whilst it is not possible to achieve delamination of large films (not in flaked form) using the alkaline wash, this may be achieved using the emulsions according to the present invention.

The alkaline and acidic emulsions are useful when a complete delamination/demetallization is desired, improving process economy; however, further control can be achieved by first affecting a delamination with the neutral emulsion, before separating the (a):(b) metallized film from (c) and subsequently affecting a demetallization of the (a):(b) film through any means known in the art. Although this process would involve more steps, if layer (c) and layer (a) are similar in composition, then this two-step process would make it far easier to separate the layers at the intermediate stage (since it would be much more straightforward to separate metallized films from non-metallized films).

The experiments involving PCW also demonstrate that the acidic and alkaline emulsions are also capable of removing inks and/or adhesive layers at the same time as affecting delamination/demetallization.

**Claims**

1. A process for treating a polyolefin recycling stream (A), comprising, in the given order, the steps of:

   i) providing a polyolefin recycling stream (A), comprising at least 50 wt.-%, relative to the total weight of the polyolefin recycling stream (A), of multilayer films (F) comprising the following layers:

   (a) an outer layer consisting of a composition comprising at least 90 wt.% of one or more polyolefins (PO);
   (b) a metal layer in contact with the outer layer (a); and
   (c) one or more further layers wherein at least one of the one or more further layers is in contact with the metal layer (b), wherein the one or more further layers may contain non-polyolefin material or one or more polyolefins that may be the same as or different to the one or more polyolefins (PO) of the outer layer (a), with the proviso that the further layer that is in contact with the metal layer (b) contains one or more polyolefins that may be the same as or different to the one or more polyolefins (PO) of the outer layer (a),

   ii) contacting the polyolefin recycling stream (A) with an emulsion (E) comprising:

   (a) an aqueous phase; and
   (b) an organic phase,

   thereby obtaining a suspended polyolefin recycling stream (B),
   iii) subjecting the suspended polyolefin recycling stream (B) to agitation through ultrasonic treatment, thereby obtaining a treated recycling stream (C) dispersed in the emulsion (E),

iv) removing the emulsion (E) from the treated recycling stream (C),

v) optionally recycling one, or both, of the aqueous phase and the organic phase.

2. The process according to claim 1, wherein step iii) is carried out for a period of time in the range from 1 minute to 4 hours, more preferably in the range from 5 minutes to 2 hours, most preferably in the range from 10 minutes to 1 hour.

3. The process according to either claim 1 or claim 2, wherein step iii) is carried out at a temperature in the range from 20 to 95 °C, more preferably in the range from 40 to 90 °C, most preferably in the range from 50 to 85 °C.

4. The process according to any one of the preceding claims, wherein the organic phase comprises at least 90% v/v of one or more fully saturated organic solvents having logP values in the range from 1.0 to 10.0, preferably wherein the one or more fully saturated organic solvents are selected from the group of linear and branched alkanes and ethers, most preferably the group of linear and branched alkanes.

5. The process according to any one of the preceding claims, wherein the aqueous phase is a substantially neutral aqueous phase, having a pH in the range from 5.0 to 9.0, more preferably in the range from 6.0 to 8.0, most preferably in the range from 6.5 to 7.5.

6. The process according to any one of claims 1 to 4, wherein the aqueous phase is an acidic aqueous phase, having a pH in the range from 0.0 to 5.0, more preferably in the range from 0.0 to 3.0, most preferably in the range from 0.0 to 1.0.

7. The process according to claim 6, wherein the acidic aqueous phase is an inorganic oxoacid solution, preferably wherein the inorganic oxoacid is selected from the group consisting of disulphuric acid, sulphuric acid, phosphoric acid, nitric acid, perchloric acid, and mixtures thereof, most preferably sulphuric acid.

8. The process according to any one of claims 1 to 4, wherein the aqueous phase is an alkaline aqueous phase, having a pH in the range from 9.0 to 14.0, more preferably in the range from 11.0 to 14.0, most preferably in the range from 12.0 to 14.0.

9. The process according to any one of the preceding claims, wherein the alkaline aqueous phase is an aqueous solution of a base selected from the group consisting of calcium hydroxide, potassium hydroxide, magnesium hydroxide, lithium hydroxide, sodium bicarbonate, sodium hydroxide and mixtures thereof, preferably sodium hydroxide.

10. The process according to any one of the preceding claims, wherein the amount of the base in the alkaline aqueous phase is in the range from 0.05 to 10 wt.-%, more preferably in the range from 0.10 to 7 wt.-%, most preferably in the range from 0.50 to 5 wt.-%, relative to the total weight of the alkaline aqueous phase.

11. The process according to any one of the preceding claims, wherein the aqueous phase comprises a detergent in an amount in the range from 0.1 wt.-% to 1.0 wt.-%, relative to the total weight of the aqueous phase.

12. The process according to any one of the preceding claims, wherein the metal layer (b) is a vapour-deposited metal layer, wherein said metal layer has been vapour-deposited on the outer layer (a).

13. A use of an emulsion (E1) comprising an organic phase and a substantially neutral aqueous phase having a pH in the range from 5.0 to 9.0, more preferably in the range from 6.0 to 8.0, most preferably in the range from 6.5 to 7.5, for effecting delamination of multilayer films (F) comprising the following layers:

   (a) an outer layer consisting of a composition comprising at least 90 wt.-% of one or more polyolefins (PO);

   (b) a metal layer in contact with the outer layer (a); and

   (c) one or more further layers wherein at least one of the one or more further layers is in contact with the metal layer (b), wherein the one or more further layers may contain non-polyolefin material or one or more polyolefins that may be the same as or different to the one or more polyolefins (PO) of the outer layer (a), with the proviso that the further layer that is in contact with the metal layer (b) contains one or more polyolefins that may be the same as or different to the one or more polyolefins (PO) of the outer layer (a),

to afford a metallized film comprising layers (a) and (b) and a further film derived from layer (c), which may be a monolayer or multilayer film.

14. A use of an emulsion (E2) comprising an organic phase and an acidic aqueous phase having a pH in the range from 0.0 to 5.0, more preferably in the range from 0.0 to 3.0, most preferably in the range from 0.0 to 1.0, for effecting delamination and demetallization of multilayer films (F) comprising the following layers:

(a) an outer layer consisting of a composition comprising at least 90 wt.-% of one or more polyolefins (PO);
(b) a metal layer in contact with the outer layer (a); and
(c) one or more further layers wherein at least one of the one or more further layers is in contact with the metal layer (b), wherein the one or more further layers may contain non-polyolefin material or one or more polyolefins that may be the same as or different to the one or more polyolefins (PO) of the outer layer (a), with the proviso that the further layer that is in contact with the metal layer (b) contains one or more polyolefins that may be the same as or different to the one or more polyolefins (PO) of the outer layer (a),

to afford a monolayer film derived from layer (a) and a further film derived from layer (c), which may be a monolayer or multilayer film.

15. A use of an emulsion (E3) comprising an organic phase and an alkaline aqueous phase having a pH in the range from 9.0 to 14.0, more preferably in the range from 11.0 to 14.0, most preferably in the range from 12.0 to 14.0, for effecting delamination and demetallization of multilayer films (F) comprising the following layers:

(a) an outer layer consisting of a composition comprising at least 90 wt.-% of one or more polyolefins (PO);
(b) a metal layer in contact with the outer layer (a); and
(c) one or more further layers wherein at least one of the one or more further layers is in contact with the metal layer (b), wherein the one or more further layers may contain non-polyolefin material or one or more polyolefins that may be the same as or different to the one or more polyolefins (PO) of the outer layer (a), with the proviso that the further layer that is in contact with the metal layer (b) contains one or more polyolefins that may be the same as or different to the one or more polyolefins (PO) of the outer layer (a),

to afford a monolayer film derived from layer (a) and a further film derived from layer (c), which may be a monolayer or multilayer film.

Europäisches
Patentamt

European
Patent Office

Office européen
des brevets

# EUROPEAN SEARCH REPORT

Application Number

EP 22 18 6970

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 3 828 228 A1 (BOREALIS AG [AT])<br>2 June 2021 (2021-06-02)<br>* abstract *<br>* claims 1-15 *<br>* paragraphs [0023] - [0024] *<br>* paragraph [0033] *<br>* paragraph [0055]; figure 1 *<br>* Experimental part on p. 7, [64] - [67 * | 1-15<br><br>2,3,5,<br>8-13,15 | INV.<br>B29B17/02<br>C08J11/06<br>C08J11/08 |
| Y<br>A | EP 3 964 542 A1 (BOREALIS AG [AT])<br>9 March 2022 (2022-03-09)<br>* abstract *<br>* claims 1-15 *<br>* paragraphs [0092] - [0094] *<br>* page 13; table 4 *<br>* paragraphs [0009] - [0103]; examples 1-5 * | 2,3,5,<br>8-13,15<br>1,4,6,7,<br>14 | |

-----

TECHNICAL FIELDS
SEARCHED      (IPC)

B29B
C09J
C08J

The present search report has been drawn up for all claims

| Place of search | Date of completion of the search | Examiner |
|---|---|---|
| Munich | 2 January 2023 | Schlembach, Sandra |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 22 18 6970

This annex lists the patent family members relating to the patent documents cited in the above-mentioned European search report.
The members are as contained in the European Patent Office EDP file on
The European Patent Office is in no way liable for these particulars which are merely given for the purpose of information.

02-01-2023

| Patent document cited in search report | | Publication date | Patent family member(s) | | Publication date |
|---|---|---|---|---|---|
| EP 3828228 | A1 | 02-06-2021 | CN | 114761471 A | 15-07-2022 |
| | | | EP | 3828228 A1 | 02-06-2021 |
| | | | WO | 2021104797 A1 | 03-06-2021 |
| EP 3964542 | A1 | 09-03-2022 | EP | 3964542 A1 | 09-03-2022 |
| | | | TW | 202210529 A | 16-03-2022 |
| | | | WO | 2022049068 A1 | 10-03-2022 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JAMES SANGSTER.** Octanol-Water Partition Coefficients of simple organic compounds. *J. Phys. Chem. Ref. Data,* 1989, vol. 18 (3), 1111-1226